# EUROPEAN PATENT SPECIFICATION

(11) **EP 4 072 459 B1**
(45) Date of publication and mention of the grant of the patent: **04.11.2026**
(21) Application number: 20899181.0
(22) Date of filing: 08.12.2020
(51) Int. Cl.: A61B 34/10, B25J 9/16, G06T 7/00

(54) **A FAST METHOD FOR ROBOT PATH PLANNING WITH OBSTACLE AVOIDANCE**
SCHNELLES VERFAHREN ZUR ROBOTERBAHNPLANUNG MIT HINDERNISVERMEIDUNG
PROCÉDÉ RAPIDE DE PLANIFICATION DE TRAJECTOIRE DE ROBOT AVEC ÉVITEMENT DES OBSTACLES

(30) Priority: 13.12.2019 US 201916713686
(43) Date of publication of application: 19.10.2022
(73) Proprietor: Edda Technology, Inc., Princeton, NJ 08540 (US)
(72) Inventor: MAO, Yuanfeng, Mt Laurel, New Jersey 08054 (US); WEI, Guo-Qing, Plainsboro, New Jersey 08536 (US); SALEHEEN, Firdous, Lawrenceville, New Jersey 08648 (US); FAN, Li, Belle Mead, New Jersey 08502 (US); ZENG, Xiaolan, Princeton, New Jersey 08540 (US); QIAN, Jianzhong, Princeton Junction, New Jersey 08550 (US)
(74) Representative: Müller-Boré & Partner Patentanwälte PartG mbB
(86) International application number: PCT/US2020/063714
(87) International publication number: WO 2021/118959

(56) References cited:
- CN-B- 102 520 718
- US-A1- 2016 221 187
- US-A1- 2016 221 187
- US-A1- 2016 221 187
- US-A1- 2017 071 672
- CHENG ALLEN ET AL: "Bidirectional Heuristic Search for Motion Planning with an Extend Operator", 2019 IEEE/RSJ INTERNATIONAL CONFERENCE ON INTELLIGENT ROBOTS AND SYSTEMS (IROS), IEEE, 3 November 2019 (2019-11-03), pages 7425 - 7430, XP033695369, [retrieved on 20200123], DOI: 10.1109/IROS40897.2019.8967796
- CORRELL: "Introduction to Robotics #4: Path-Planning", CORRELL LAB AT CU COMPUTER SCIENCE, 14 September 2011 (2011-09-14), pages 1 - 3, XP055836823, Retrieved from the Internet <URL:http://correll.cs.colorado.edu/?p=965> [retrieved on 20210131]
- GLASIUS R; KOMODA A; GIELEN S C A M: "Neural network dynamics for path planning and obstacle avoidance", NEURAL NETWORKS, 1995, pages 125 - 133, XP004014353, Retrieved from the Internet <URL:https://www.mbfys.ru.nl/staff/s.gielen/path.pdf> [retrieved on 20210131]

## Description

### BACKGROUND OF THE INVENTION

### 2. Field of the Invention

The present disclosure relates to a system and method of robot path planning with obstacle avoidance. In particular, the present disclosure is related to a fast method for planning movements of a robotic arm while avoiding obstacles.

### 3. Description of Related Art

Robotic path planning methods try to find a trajectory of robot motion from an initial position to a goal position. For a robotic arm having multiple joints, the degrees of freedom (DOF) in the motion equals to the number of joints. Therefore, there are as many possible moves as the number of joints for each movement. Generally, it may be required that the motion be smooth, the length of trajectory be short, there be no singularities in the path, and obstacles be avoided. Usually the continuous space of joint angles may be discretized as a high-dimensional grid. The path planning may be performed in the grid of the joint angle space.

Existing path planning methods may be categorized into two types: nondeterministic and deterministic. Non-deterministic methods, such as the Rapidly Exploring Random Tree (RRT) algorithm explore the next movement of a robot randomly, with a bias toward large unsearched areas. Such methods are fast since at each step only one of the next possible moves in the grid is explored. However, the methods may not guarantee a feasible path. The path found by the RRT method may not be bounded in length. Furthermore, the movements may be different if re-planned for a second time due to the random nature of the search. The deterministic methods, such as the A* algorithm explore all possible moves in the grid by minimizing a cost function. The generated path is unique. However, the planning process may be slow, since all neighbors in the grid may need to be explored.

Therefore, it is highly desirable to provide a deterministic path planning method that is fast and provides a path that is as close as possible to the optimal path of the traditional deterministic algorithms.

US 2016/221187 A1 describes methods and systems for selecting a grasp point on an object. In particular, a robotic manipulator may identify characteristics of a physical object within a physical environment. Based on the identified characteristics, the robotic manipulator may determine potential grasp points on the physical object corresponding to points at which a gripper attached to the robotic manipulator is operable to grip the physical object. Subsequently, the robotic manipulator may determine a motion path for the gripper to follow in order to move the physical object to a drop-off location for the physical object and then select a grasp point, from the potential grasp points, based on the determined motion path. After selecting the grasp point, the robotic manipulator may grip the physical object at the selected grasp point with the gripper and move the physical object through the determined motion path to the drop-off location.

The claimed invention is defined by a method according to appended claim 1, a system according to appended claim 5, and a non-transitory machine-readable medium according to appended claim 9.

### BRIEF DESCRIPTION OF THE DRAWINGS

The present disclosure described herein is further described in terms of exemplary embodiments. These exemplary embodiments are described in detail with reference to the drawings. These embodiments are non-limiting exemplary embodiments, in which like reference numerals represent similar structures throughout the several views of the drawings, and wherein:
Fig. 1 depicts an exemplary system diagram for robot path planning;
Fig. 2 illustrates an exemplary flow diagram for path planning;
Fig. 3 illustrates an exemplary flow diagram for path smoothing;
Fig. 4 shows an example of path smoothing; and
Fig. 5 depicts an architecture of a computer which can be used to implement a specialized system incorporating the present teaching.

### DETAILED DESCRIPTION

The present disclosure is directed to a method and system for robot path planning while avoiding obstacles. Specifically, the present disclosure is directed to a system and method of planning a path for a robotic arm having multiple joints while avoiding obstacles. A robotic arm as referred to herein is an arm of a robot having a plurality of segments. A pose (i.e., position and orientation) of the robotic arm may be determined by a plurality of values (e.g., angle values) each of which corresponds to an angle formed between consecutive operable segments of the robotic arm.

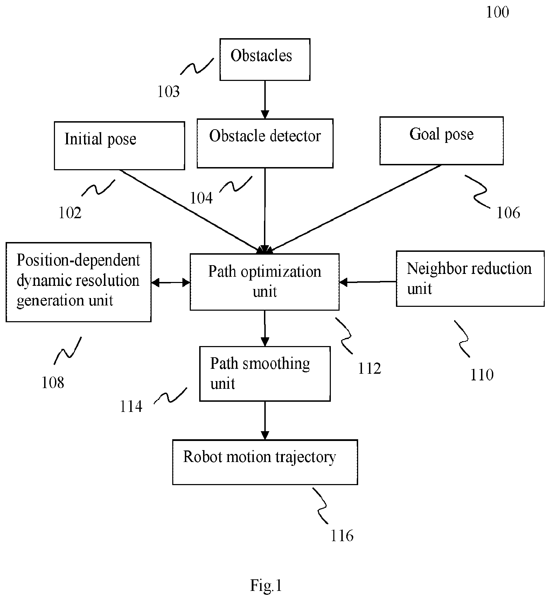

Fig. 1 shows an exemplary system diagram 100 for facilitating robot path planning, i.e., robotic arm path planning, according to an embodiment of the present teaching. The system 100 includes an obstacle detector 104, a position-dependent dynamic resolution generation unit 108, a neighbor reduction unit 110, a path optimization unit 112, and a path smoothing unit 114.

As stated above, by one embodiment of the present disclosure, a robotic arm may have multiple joints. Specifically, the robot's arm may include multiple segments, wherein a connection between adjacent segments is referred to as a joint. Typical robots may have 6 or 7 joints, meaning that the robot may have 6 or 7 degrees of freedom (DOF) in movement. The robot's initial pose (i.e., position and orientation) 102 may be characterized by angles formed between the joints (referred to herein as joint angles). It must be appreciated that the joint angles may also characterize any other position of the robot motion, e.g., when a target object has changed its position after robot has started to move toward the target. The obstacles 103 may represent one or more subjects within the robot's working space that are each identified by the obstacle detector 104. The obstacle(s) may be a surgeon, a patient's body part, or any another medical device in the operating room. The goal pose (i.e., final position and orientation) 106 may represent a desired pose of the robot's arm. It must be appreciated that the robot's arm may include an end-effector (i.e., a device or tool connected at an end of the robot's arm). The goal pose in joint angles may be computed from the desired end-effector's pose (position and orientation) based on robot inverse kinematics.

Robot path planning may usually be performed in a discretized space of joint angles. Each joint angle may be discretized by an interval *δ* (also referred to herein as an angle step-value). For example, for a 6-DOF robot, any particular position may be represented by a joint angle *configuration* J = (*j*₁, *j*₂, *j*₃, *j*₄, *j*₅, *j*₆), where *jᵢ* is the joint angle of the i-th joint. The term configuration is used to represent the combined joint angles of all joints, which uniquely determines the end-effector's pose. According to one embodiment, after the robot moves to a next position, each of the joints may be in one of the joint angles at *jᵢ* - *δ , jᵢ, jᵢ,* +*δ , i* = 1,2,... ,6. It must be noted that during an iteration of path planning for the robotic arm, a joint may remain at the same joint angle as in the previous position. However, it is prohibited that all the joints remain in the same angle as in the previous iteration, since this represents a no-motion status. Therefore, there may be 3⁶ - 1=728 possible moves (for a total of N= 6 joints) from one configuration to the next. In the discretized joint angle space, a joint angle configuration may also be referred to as a *node* in the grid of joint angles. The path planning problem becomes that of finding a path starting from the initial node in the grid to the desired node in the grid while satisfying certain criteria. The desired node may also be referred to as the *ending node* or *goal node.*

The position-dependent dynamic resolution generation unit 108 may generate a grid of non-constant intervals (step-values) to improve the efficiency in finding a path. The neighbor reduction unit 110 may trim the search space from one node to its neighboring nodes, so that only important nodes may be visited. Details regarding the dynamic resolution generation unit 108 and the neighbor reduction unit 110 are described next. The path optimization unit 112 may find the optimal path from the initial node to the goal node based on certain criteria. The output of the path optimization unit is a motion trajectory, which specifies the sequences of robot motion to reach the goal node. The path smoothing unit 114 may smooth out jitter motions generated by the path optimization unit 112. The output of the smoothing is a smoothed motion trajectory 116.

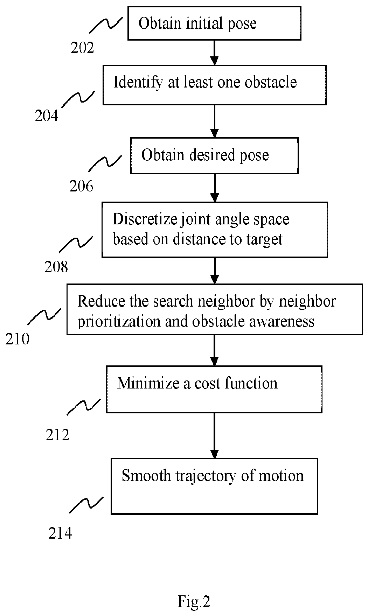

Fig. 2 illustrates an exemplary flow diagram for robot path planning, according to one embodiment of the present teaching. At step 202, the robot's initial joint angles at the starting pose may be obtained. At step 204, one or more obstacles may be identified. At step 206, the goal/desired pose of the robot joint angles may be obtained. At step 208, the robot joint angle space may be discretized. Denote the discretization interval at the n-th node *sₙ* in the joint angle grid by *δₙ* . The discretization resolution *δₙ* i.e., the angle step-value may be expressed as a function of the distance from the current node to the goal node as ${δ}_{n} = w \left({c}_{n}\right)$

Where *cₙ* is the distance from the n-th node to the goal node, and *w*(*cₙ*) is a function of *cₙ*. The distance *cₙ* may be defined as the Euclidian distance between the joint angles at the n-th node and those at the goal node, while the function *w*(*cₙ*) may be a linear, parabolic or sigmoid function of the distance *cₙ*. An exemplar embodiment of the sigmoid function may take the following form $w \left({c}_{n}\right) = \frac{{δ}_{max}}{1 + {e}^{\left(1-{c}_{n}∗\left(\frac{2}{ρ}\right)\right) ∗ α}}$
where *δₘₐₓ* is the maximum resolution, *α* is a shape factor controlling the steepness of the curve, and *ρ* is the estimated longest distance between initial node and goal node. The optimal value of *α* may be found experimentally but may usually be set at 6. When α is set at 6, at the initial node when cₙ = ρ, the resolution δₙ will be close to δₘₐₓ, whereas at the goal node cₙ = 0, the resolution δₙ, will be a very small number close to 0. When the path is planned from the initial position to the goal position, the resolution will gradually change from δₘₐₓ to a very small number. Intuitively, the dynamic resolution may be interpreted as follows. When the robot is far away from the goal position, it may move at a bigger step, while when it is closer to the goal position, it may move at a smaller step. Conventional methods of path planning use a resolution that is constant across the full path. In the present teaching, the discretization resolution may be made dynamically depending on the distance from the current node to the goal node.

At step 210, the search space from each node to its neighboring nodes may be reduced. One embodiment of the reduction may be based on neighbor prioritization. At each node of the joint angle grid, there are 728 neighboring nodes for a 6-DOF robot arm. By the embodiments of the present disclosure, instead of requiring all the six joint angles to be changed (from their previous values), a number of joint angles that have changed are determined. Further, for neighborhood reduction purposes, only those neighbors which have the number of changed joint angles greater than a predetermined threshold are be considered.

After the neighborhood reduction, a trajectory is determined based on the reduced neighborhood which minimizes a cost function (step 212), using the conventional A* algorithm. By one embodiment, the details of the cost function and minimization are described below. Suppose a trajectory includes N steps, 1,2, ...., N. At any intermediate step *n,* the cost from the starting position to the n-th position may be denoted by g(n). The cost g(n) may be defined as the Euclidian distance between the joint angles (i.e., configuration of the end-effector) at the initial position and those at the n-th step. Another cost that provides an estimate of the cost from the n-th step to the ending step (N) may be denoted by h(n). The cost h(n) may be defined as the Euclidian distance between the joint angles at the n-th step and those at step N (the goal pose). Denote the minimum distance, i.e., smallest distance, of the robot arm (including end-effector) from all the obstacles at step *n* by c(n). The total cost function f(n) at the n-th step may take the form of: $f \left(n\right) = g \left(n\right) + h \left(n\right) - ω ∗ c \left(n\right)$
where ω is a constant weighting factor greater than zero. The weight ω balances between the joint angle cost and the obstacle-distance cost. The weighting factor may be learned through a process as described in U.S. Patent Application No. 16/692,264, which is incorporated herein in its entirety. The minimization of the cost function f(n) may be performed using an existing method, such as the A* algorithm. The path planned after the neighbor reduction may generate a sub-optimal path in comparison to the full neighbor search. At step 214, the found path may be smoothed to generate a smooth trajectory.

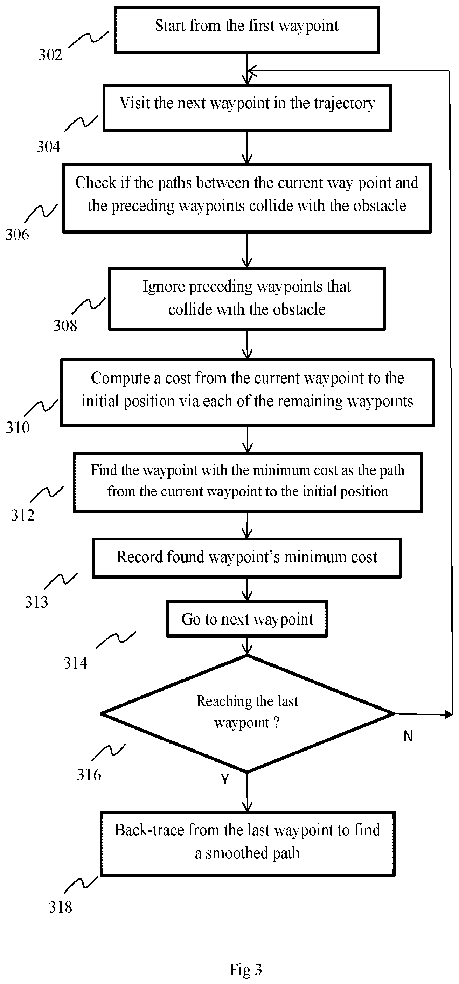

Fig. 3 illustrates an exemplary flow of path smoothing for step 214, according to one embodiment of the present teaching. The nodes that constitute the trajectory are referred to herein as *waypoints pₖ, k* = 1,2 ..., *N*, where *N* is the number of waypoints. The smoothing of the trajectory is to pick waypoints that makes a smooth trajectory while at the same time ensuring that the new trajectory does not collide with the obstacle. The smoothing starts at step 302 with the first waypoint. Then the next waypoint will be visited at step 304. At step 306, it is checked if the direct path connecting the current waypoint *pₖ* to each of the preceding waypoints {*p*₁, *p*₂,..., *p*_{*k*-1}} collides with the obstacle. Here direct path means the path generated by moving directly from one waypoint to another. At step 308, ignore the preceding waypoints whose direct paths to the current waypoint *pₖ* collide with the obstacle. Then for each of the remaining non-colliding waypoints {*pₘ*}, a cost may be computed. The cost may be computed as a weighted sum of the Euclidean distance from the current waypoint *pₖ* to the preceding waypoint *pₘ* and the cost at *pₘ*. The cost at *pₘ* was already computed when the waypoint *pₘ* was visited the first time. Intuitively this is the cost to go from the current waypoint *pₖ* to the first waypoint via the waypoint *pₘ*.

At step 312, the waypoint among all the preceding waypoints {*pₘ*} with the minimum cost is picked. At step 313, the minimum cost is stored for the picked waypoint as the cost of that waypoint. At step 314, the waypoint index may be incremented by 1 to go to the next waypoint *p*_{*k*+1}. At step 316, it is checked if the next way point *p*_{*k*+1} has reached the last waypoint N. If not, the above process may be repeated. Otherwise, a backtracking may be performed at step 318 to retrieve the smoothed path. The backtracking may be performed by starting with the last waypoint to retrieve the minimum-cost waypoint via which the first waypoint is reached. The minimum-cost waypoint will be used as a new waypoint to retrieve its own minimum-cost waypoint. This process repeats until the first waypoint is reached.

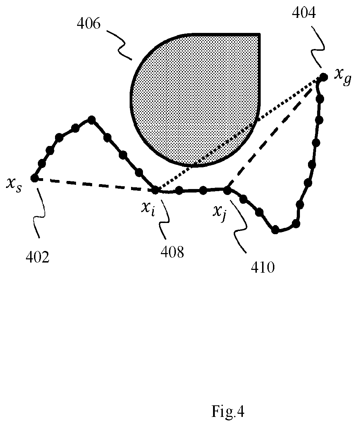

Fig. 4 illustrates an example of the key steps in path smoothing. The solid line is a trajectory and the dots on the line are waypoints. The point *xₛ* (402) is the first waypoint, the point *x_{g}* (404) is the last waypoint, and 406 is an obstacle. At waypoint *xᵢ* (408), the direct path to the first waypoint *xₛ* is the path of minimum cost, and that minimum cost is stored as the cost for the waypoint *xᵢ*. From waypoint *xⱼ* (410), the weighted sum of the cost from *xⱼ* to *xᵢ* and the cost at waypoint *xᵢ* is the minimum among all preceding waypoints of *xⱼ*. From the last waypoint *x_{g}*, the direct path from *x_{g}* to its preceding waypoint *xᵢ* hits the obstacle, and therefore that path will not be considered. The waypoint *xⱼ* is the waypoint of minimum cost from *x_{g}*. The back-traced path from the last waypoint to the first waypoint is *x_{g}--xⱼ--xᵢ --xₛ.*

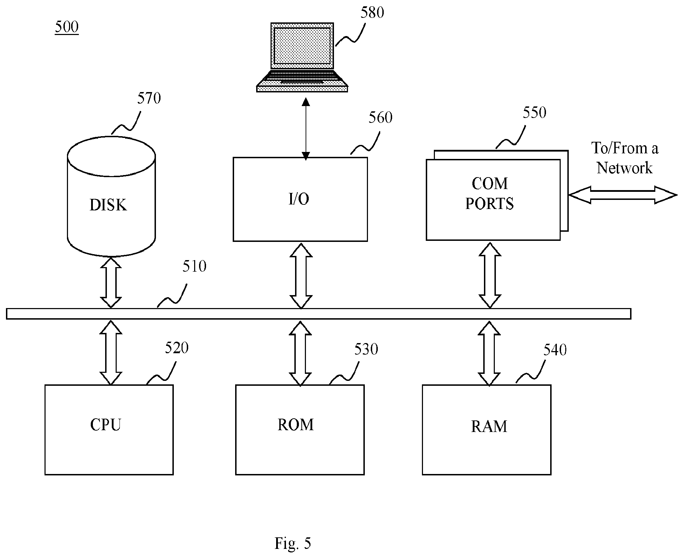

Fig. 5 is an illustrative diagram of an exemplary computer system architecture, in accordance with various embodiments of the present teaching. Such a specialized system incorporating the present teaching has a functional block diagram illustration of a hardware platform which includes user interface elements. Computer 500 may be a general-purpose computer or a special purpose computer. Both can be used to implement a specialized system for the present teaching. Computer 500 may be used to implement any component(s) described herein. For example, the present teaching may be implemented on a computer such as computer 500 via its hardware, software program, firmware, or a combination thereof. Although only one such computer is shown, for convenience, the computer functions relating to the present teaching as described herein may be implemented in a distributed fashion on a number of similar platforms, to distribute the processing load.

Computer 500, for example, may include communication ports 550 connected to and from a network connected thereto to facilitate data communications. Computer 400 also includes a central processing unit (CPU) 520, in the form of one or more processors, for executing program instructions. The exemplary computer platform may also include an internal communication bus 510, program storage and data storage of different forms (e.g., disk 570, read only memory (ROM) 530, or random access memory (RAM) 540), for various data files to be processed and/or communicated by computer 500, as well as possibly program instructions to be executed by CPU 520. Computer 500 may also include an I/O component 560 supporting input/output flows between the computer and other components therein such as user interface elements 580. Computer 500 may also receive programming and data via network communications.

Hence, aspects of the present teaching(s) as outlined above, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a server or host computer of the robot's motion planning system into the hardware platform(s) of a computing environment or other system implementing a computing environment or similar functionalities in connection with path planning. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

Hence, a machine-readable medium may take many forms, including but not limited to, a tangible storage medium, a carrier wave medium or physical transmission medium. Non-volatile storage media include, for example, optical or magnetic disks, such as any of the storage devices in any computer(s) or the like, which may be used to implement the system or any of its components as shown in the drawings. Volatile storage media include dynamic memory; such as a main memory of such a computer platform. Tangible transmission media include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described above may be embodied in a hardware device, it may also be implemented as a software only solution-e.g., an installation on an existing server. In addition, the robot's motion planning system, as disclosed herein, may be implemented as a firmware, firmware/software combination, firmware/hardware combination, or a hardware/firmware /software combination.

While the foregoing has described what are considered to constitute the present teachings and/or other examples, it is understood that various modifications may be made thereto and that the subject matter disclosed herein may be implemented in various forms and examples, and that the teachings may be applied in numerous applications, only some of which have been described herein.

## Claims

1. A method, implemented on a machine (500) having at least one processor (520), storage (570), and a communication platform (550) capable of connecting to a network for path planning, the method comprising:
obtaining information of a current pose of a robotic arm having a plurality of operable segments, wherein the information includes a plurality of values, each of which corresponds to an angle (jᵢ) formed between consecutive operable segments of the robotic arm;
obtaining a desired pose (106) where the robotic arm needs to reach;
computing an angle step-value (δ) for the current pose of the robotic arm based on a function of a distance between the current pose and the desired pose (106), wherein the angle step-value (δ) is to be used to determine a plurality of candidate next poses of the plurality of operable segments;
selecting one or more of the plurality of candidate next poses based on at least one criterion; and
determining a trajectory from the current pose to the desired pose (106) based on the selected one or more candidate next poses,
**characterized in that** the at least one criterion corresponds to each of the selected one or more candidate next poses having a number of angles (jᵢ) associated with the plurality of operable segments having values that are different than corresponding values for the angles (jᵢ) associated with the current pose being greater than a threshold.

2. The method of claim 1, wherein the angle step-value (δ) computed for the current pose of the robotic arm is greater than the angle step-value (δ) computed for the selected one or more candidate next poses.

3. The method of claim 1, wherein the angle step-value (δ) is further computed based on an estimated longest distance between an initial pose (102) of the robotic arm and the desired pose (106) where the robotic arm needs to reach.

4. The method of claim 1, further comprising:
smoothing the determined trajectory, wherein the trajectory includes a plurality of waypoints, each of which is associated with a pose of the robotic arm, the smoothing being based on a cost computed for each waypoint.

5. A system (500) for path planning, the system comprising:
at least one processor (520) configured to
obtain information of a current pose of a robotic arm having a plurality of operable segments, wherein the information includes a plurality of values, each of which corresponds to an angle (ji) formed between consecutive operable segments of the robotic arm,
obtain a desired pose (106) where the robotic arm needs to reach,
compute an angle step-value (δ) for the current pose of the robotic arm based on a function of a distance between the current pose and the desired pose (106), wherein the angle step-value (δ) is to be used to determine a plurality of candidate next poses of the plurality of operable segments,
select one or more of the plurality of candidate next poses based on at least one criterion, and
determine a trajectory from the current pose to the desired pose (106) based on the selected one or more candidate next poses,
**characterized in that** the at least one criterion corresponds to each of the selected one or more candidate next poses having a number of angles (jᵢ) associated with the plurality of operable segments having values that are different than corresponding values for the angles (jᵢ) associated with the current pose being greater than a threshold.

6. The system (500) of claim 5, wherein the angle step-value (δ) computed for the current pose of the robotic arm is greater than the angle step-value (δ) computed for the selected one or more candidate next poses.

7. The system (500) of claim 5, wherein the angle step-value (δ) is further computed based on an estimated longest distance between an initial pose (102) of the robotic arm and the desired pose (106) where the robotic arm needs to reach.

8. The system (500) of claim 5, wherein the at least one processor (520) is further configured to:
smooth the determined trajectory, wherein the trajectory includes a plurality of waypoints, each of which is associated with a pose of the robotic arm, the smoothing being based on a cost computed for each waypoint.

9. A non-transitory machine (500)-readable medium having information recorded thereon for searching data, wherein the information, when read by a machine (500), causes the machine (500) to perform the steps of:
obtaining information of a current pose of a robotic arm having a plurality of operable segments, wherein the information includes a plurality of values, each of which corresponds to an angle (jᵢ) formed between consecutive operable segments of the robotic arm;
obtaining a desired pose (106) where the robotic arm needs to reach;
computing an angle step-value (δ) for the current pose of the robotic arm based on a function of a distance between the current pose and the desired pose (106), wherein the angle step-value (δ) is to be used to determine a plurality of candidate next poses of the plurality of operable segments;
selecting one or more of the plurality of candidate next poses based on at least one criterion; and
determining a trajectory from the current pose to the desired pose (106) based on the selected one or more candidate next poses,
**characterized in that** the at least one criterion corresponds to each of the selected one or more candidate next poses having a number of angles (jᵢ) associated with the plurality of operable segments having values that are different than corresponding values for the angles (jᵢ) associated with the current pose being greater than a threshold.

10. The medium of claim 9, wherein the angle step-value (δ) computed for the current pose of the robotic arm is greater than the angle step-value (δ) computed for the selected one or more candidate next poses.

11. The medium of claim 9, further comprising:
smoothing the determined trajectory, wherein the trajectory includes a plurality of waypoints, each of which is associated with a pose of the robotic arm, the smoothing being based on a cost computed for each waypoint.

## Patentansprüche

1. Ein Verfahren, das auf einer Maschine (500) implementiert ist, die mindestens einen Prozessor (520), einen Speicher (570) und eine Kommunikationsplattform (550) aufweist, die zur Verbindung mit einem Netzwerk zur Wegplanung in der Lage ist, wobei das Verfahren Folgendes umfasst:
Erhalten von Informationen über eine aktuelle Pose eines Roboterarms mit einer Vielzahl betätigbarer Segmente, wobei die Informationen eine Vielzahl von Werten beinhalten, von denen jeder einem Winkel (jᵢ) entspricht, der zwischen aufeinanderfolgenden betätigbaren Segmenten des Roboterarms gebildet wird;
Erhalten einer gewünschten Pose (106), die der Roboterarm erreichen muss;
Berechnen eines Winkelschrittwerts (δ) für die aktuelle Pose des Roboterarms auf der Grundlage einer Funktion des Abstands zwischen der aktuellen Pose und der gewünschten Pose (106), wobei der Winkelschrittwert (δ) verwendet werden soll, um eine Vielzahl von Kandidaten für nächste Posen der Vielzahl von betätigbaren Segmenten zu bestimmen;
Auswählen eines oder mehrerer der Vielzahl von Kandidaten für nächste Posen auf der Grundlage mindestens eines Kriteriums; und
Bestimmen einer Trajektorie von der aktuellen Pose zur gewünschten Pose (106) auf der Grundlage des ausgewählten einen oder mehreren Kandidaten für nächste Posen,
**dadurch gekennzeichnet, dass**
das mindestens eine Kriterium darin besteht, dass jeder der ausgewählten einen oder mehreren Kandidaten für nächste Posen eine Anzahl von der Vielzahl von betätigbaren Segmenten zugeordneten Winkeln (jᵢ) aufweist, die Werte aufweisen, die sich von entsprechenden Werten für die Winkel (jᵢ), die der aktuellen Pose zugeordnet sind, unterscheiden, wobei die Anzahl größer als ein Schwellenwert ist.

2. Das Verfahren nach Anspruch 1, wobei der für die aktuelle Pose des Roboterarms berechnete Winkelschrittwert (δ) größer ist als der für die ausgewählten einen oder mehreren Kandidaten für nächste Posen berechnete Winkelschrittwert (δ).

3. Das Verfahren nach Anspruch 1, wobei der Winkelschrittwert (δ) ferner auf der Grundlage einer geschätzten längsten Entfernung zwischen einer Anfangspose (102) des Roboterarms und der gewünschten Pose (106), die der Roboterarm erreichen muss, berechnet wird.

4. Das Verfahren nach Anspruch 1, ferner umfassend:
Glätten der bestimmten Trajektorie, wobei die Trajektorie eine Vielzahl von Wegpunkten beinhaltet, von denen jeder einer Pose des Roboterarms zugeordnet ist, wobei das Glätten auf den Kosten basiert, die für jeden Wegpunkt berechnet werden.

5. Ein System (500) zur Wegplanung, wobei das System Folgendes umfasst:
mindestens einen Prozessor (520), der konfiguriert ist, zum:
Erhalten von Informationen über eine aktuelle Pose eines Roboterarms mit einer Vielzahl betätigbarer Segmente, wobei die Informationen eine Vielzahl von Werten beinhalten, von denen jeder einem Winkel (jᵢ) entspricht, der zwischen aufeinanderfolgenden betätigbaren Segmenten des Roboterarms gebildet wird,
Erhalten einer gewünschten Pose (106), die der Roboterarm erreichen muss;
Berechnen eines Winkelschrittwerts (δ) für die aktuelle Pose des Roboterarms auf der Grundlage einer Funktion des Abstands zwischen der aktuellen Pose und der gewünschten Pose (106), wobei der Winkelschrittwert (δ) verwendet werden soll, um eine Vielzahl von Kandidaten für nächste Posen der Vielzahl von betätigbaren Segmenten zu bestimmen;
Auswählen eines oder mehrerer der Vielzahl von Kandidaten für nächste Posen auf der Grundlage mindestens eines Kriteriums; und
Bestimmen einer Trajektorie von der aktuellen Pose zur gewünschten Pose (106) auf der Grundlage des ausgewählten einen oder mehreren Kandidaten für nächste Posen,
**dadurch gekennzeichnet, dass**
das mindestens eine Kriterium darin besteht, dass jeder der ausgewählten einen oder mehreren Kandidaten für nächste Posen eine Anzahl von der Vielzahl von betätigbaren Segmenten zugeordneten Winkeln (jᵢ) aufweist, die Werte aufweisen, die sich von entsprechenden Werten für die Winkel (jᵢ), die der aktuellen Pose zugeordnet sind, unterscheiden, wobei die Anzahl größer als ein Schwellenwert ist.

6. Das System (500) nach Anspruch 5, wobei der für die aktuelle Pose des Roboterarms berechnete Winkelschrittwert (δ) größer ist als der für die ausgewählten einen oder mehreren Kandidaten für nächste Posen berechnete Winkelschrittwert (δ).

7. Das System (500) nach Anspruch 5, wobei der Winkelschrittwert (δ) ferner auf der Grundlage einer geschätzten längsten Entfernung zwischen einer Anfangspose (102) des Roboterarms und der gewünschten Pose (106), die der Roboterarm erreichen muss, berechnet wird.

8. Das System (500) nach Anspruch 5, wobei der mindestens eine Prozessor (520) konfiguriert ist, zum:
Glätten der bestimmten Trajektorie, wobei die Trajektorie eine Vielzahl von Wegpunkten beinhaltet, von denen jeder einer Pose des Roboterarms zugeordnet ist, wobei das Glätten auf den Kosten basiert, die für jeden Wegpunkt berechnet werden.

9. Ein nicht-flüchtiges, maschinenlesbares Medium (500) mit darauf aufgezeichneten Informationen zum Suchen von Daten, wobei die Informationen, wenn sie von einer Maschine (500) gelesen werden, die Maschine (500) dazu veranlassen, die folgenden Schritte auszuführen:
Erhalten von Informationen über eine aktuelle Pose eines Roboterarms mit einer Vielzahl betätigbarer Segmente, wobei die Informationen eine Vielzahl von Werten beinhalten, von denen jeder einem Winkel (jᵢ) entspricht, der zwischen aufeinanderfolgenden betätigbaren Segmenten des Roboterarms gebildet wird,
Erhalten einer gewünschten Pose (106), die der Roboterarm erreichen muss;
Berechnen eines Winkelschrittwerts (δ) für die aktuelle Pose des Roboterarms auf der Grundlage einer Funktion des Abstands zwischen der aktuellen Pose und der gewünschten Pose (106), wobei der Winkelschrittwert (δ) verwendet werden soll, um eine Vielzahl von Kandidaten für nächste Posen der Vielzahl von betätigbaren Segmenten zu bestimmen;
Auswählen eines oder mehrerer der Vielzahl von Kandidaten für nächste Posen auf der Grundlage mindestens eines Kriteriums; und
Bestimmen einer Trajektorie von der aktuellen Pose zur gewünschten Pose (106) auf der Grundlage des ausgewählten einen oder mehreren Kandidaten für nächste Posen,
**dadurch gekennzeichnet, dass**
das mindestens eine Kriterium darin besteht, dass jeder der ausgewählten einen oder mehreren Kandidaten für nächste Posen eine Anzahl von der Vielzahl von betätigbaren Segmenten zugeordneten Winkeln (jᵢ) aufweist, die Werte aufweisen, die sich von entsprechenden Werten für die Winkel (jᵢ), die der aktuellen Pose zugeordnet sind, unterscheiden, wobei die Anzahl größer als ein Schwellenwert ist.

10. Das Medium nach Anspruch 9, wobei der für die aktuelle Pose des Roboterarms berechnete Winkelschrittwert (δ) größer ist als der für die ausgewählten einen oder mehreren Kandidaten für nächste Posen berechnete Winkelschrittwert (δ).

11. Das Medium nach Anspruch 9, ferner umfassend:
Glätten der bestimmten Trajektorie, wobei die Trajektorie eine Vielzahl von Wegpunkten beinhaltet, von denen jeder einer Pose des Roboterarms zugeordnet ist, wobei das Glätten auf den Kosten basiert, die für jeden Wegpunkt berechnet werden.

## Revendications

1. Un procédé mis en œuvre sur une machine (500) présentant au moins un processeur (520), une mémoire (570) et une plateforme de communication (550) capable de se connecter à un réseau destiné à la planification de chemin, le procédé comprenant :
l'obtention d'informations relatives à une pose actuelle d'un bras robotique présentant une pluralité de segments actionnables, sachant que les informations incluent une pluralité de valeurs, chacune correspondant à un angle (jᵢ) formé entre des segments actionnables consécutifs du bras robotique ;
l'obtention d'une pose souhaitée (106) que le bras robotique doit atteindre ;
le calcul d'une valeur de pas angulaire (δ) pour la pose actuelle du bras robotique sur la base d'une fonction de la distance entre la pose actuelle et la pose souhaitée (106), sachant que la valeur de pas angulaire (δ) doit être utilisée pour déterminer une pluralité de poses suivantes candidates de la pluralité de segments actionnables ;
la sélection d'une ou plusieurs parmi la pluralité de poses suivantes candidates sur la base d'au moins un critère ; et
la détermination d'une trajectoire allant de la pose actuelle à la pose souhaitée (106) sur la base de la ou des poses candidates suivantes sélectionnées,
**caractérisé en ce que**
l'au moins un critère correspond au fait que, pour chacune de la ou des poses candidates suivantes sélectionnées, un nombre d'angles (jᵢ) associés à la pluralité de segments actionnables, dont les valeurs diffèrent des valeurs correspondantes des angles (j_{¡}) associés à la pose actuelle, est supérieur à un seuil.

2. Le procédé d'après la revendication 1, sachant que la valeur de pas angulaire (δ) calculée pour la pose actuelle du bras robotique est supérieure à la valeur de pas angulaire (δ) calculée pour la ou les poses suivantes candidates sélectionnées.

3. Le procédé d'après la revendication 1, sachant que la valeur de pas angulaire (δ) est en outre calculée sur la base d'une distance maximale estimée entre une pose initiale (102) du bras robotique et la pose souhaitée (106) que le bras robotique doit atteindre.

4. Le procédé d'après la revendication 1, comprenant en outre :
le lissage de la trajectoire déterminée, sachant que la trajectoire inclut une pluralité de points de cheminement, dont chacun est associé à une pose du bras robotique, le lissage étant basé sur un coût calculé pour chaque point de cheminement.

5. Un système (500) de planification de chemin, le système comprenant :
au moins un processeur (520) configuré pour
obtenir des informations relatives à une pose actuelle d'un bras robotique présentant une pluralité de segments actionnables, sachant que les informations incluent une pluralité de valeurs, chacune correspondant à un angle (jᵢ) formé entre des segments actionnables consécutifs du bras robotique ;
obtenir une pose souhaitée (106) que le bras robotique doit atteindre ;
calculer une valeur de pas angulaire (δ) pour la pose actuelle du bras robotique sur la base d'une fonction de la distance entre la pose actuelle et la pose souhaitée (106), sachant que la valeur de pas angulaire (δ) doit être utilisée pour déterminer une pluralité de poses suivantes candidates de la pluralité de segments actionnables ;
sélectionner une ou plusieurs parmi la pluralité de poses suivantes candidates sur la base d'au moins un critère ; et
déterminer une trajectoire allant de la pose actuelle à la pose souhaitée (106) sur la base de la ou des poses candidates suivantes sélectionnées,
**caractérisé en ce que**
l'au moins un critère correspond au fait que, pour chacune de la ou des poses candidates suivantes sélectionnées, un nombre d'angles (jᵢ) associés à la pluralité de segments actionnables, dont les valeurs diffèrent des valeurs correspondantes des angles (j_{¡}) associés à la pose actuelle, est supérieur à un seuil.

6. Le système (500) d'après la revendication 5, sachant que la valeur de pas angulaire (δ) calculée pour la pose actuelle du bras robotique est supérieure à la valeur de pas angulaire (δ) calculée pour la ou les poses suivantes candidates sélectionnées.

7. Le système (500) d'après la revendication 5, sachant que la valeur de pas angulaire (δ) est en outre calculée sur la base d'une distance maximale estimée entre une pose initiale (102) du bras robotique et la pose souhaitée (106) que le bras robotique doit atteindre.

8. Le système (500) d'après la revendication 5, sachant que l'au moins un processeur (520) est destiné à :
lisser la trajectoire déterminée, sachant que la trajectoire inclut une pluralité de points de cheminement, dont chacun est associé à une pose du bras robotique, le lissage étant basé sur un coût calculé pour chaque point de cheminement.

9. Un support non transitoire lisible par machine (500), sur lequel sont enregistrées des informations destinées à la recherche de données, sachant que lesdites informations, lorsqu'elles sont lues par une machine (500), amènent la machine (500) à exécuter les étapes consistant à :
obtenir des informations relatives à une pose actuelle d'un bras robotique présentant une pluralité de segments actionnables, sachant que les informations incluent une pluralité de valeurs, chacune correspondant à un angle (jᵢ) formé entre des segments actionnables consécutifs du bras robotique ;
obtenir une pose souhaitée (106) que le bras robotique doit atteindre ;
calculer une valeur de pas angulaire (δ) pour la pose actuelle du bras robotique sur la base d'une fonction de la distance entre la pose actuelle et la pose souhaitée (106), sachant que la valeur de pas angulaire (δ) doit être utilisée pour déterminer une pluralité de poses suivantes candidates de la pluralité de segments actionnables ;
sélectionner une ou plusieurs parmi la pluralité de poses suivantes candidates sur la base d'au moins un critère ; et
déterminer une trajectoire allant de la pose actuelle à la pose souhaitée (106) sur la base de la ou des poses candidates suivantes sélectionnées,
**caractérisé en ce que**
l'au moins un critère correspond au fait que, pour chacune de la ou des poses candidates suivantes sélectionnées, un nombre d'angles (jᵢ) associés à la pluralité de segments actionnables, dont les valeurs diffèrent des valeurs correspondantes des angles (jᵢ) associés à la pose actuelle, est supérieur à un seuil.

10. Le support d'après la revendication 9, sachant que la valeur de pas angulaire (δ) calculée pour la pose actuelle du bras robotique est supérieure à la valeur de pas angulaire (δ) calculée pour la ou les poses suivantes candidates sélectionnées.

11. Le support d'après la revendication 9, comprenant en outre :
le lissage de la trajectoire déterminée, sachant que la trajectoire inclut une pluralité de points de cheminement, dont chacun est associé à une pose du bras robotique, le lissage étant basé sur un coût calculé pour chaque point de cheminement.
